# EUROPEAN PATENT APPLICATION

(11) **EP 4 621 080 A1**
(43) Date of publication of application: **24.09.2025**
(21) Application number: 24750396.4
(22) Date of filing: 01.02.2024
(51) Int. Cl.: C21D 8/12, C21D 9/46, C22C 38/00, C22C 38/60, H01F 1/147

(54) **METHOD FOR PRODUCING GRAIN-ORIENTED ELECTRICAL STEEL SHEET**

(30) Priority: 01.02.2023 JP 2023014257
(71) Applicant: JFE Steel Corporation, Tokyo 100-0011 (JP)
(72) Inventor: TANAKA, Takaaki, Tokyo 100-0011 (JP); YAMADA, Takuya, Tokyo 100-0011 (JP); TERASHIMA, Takashi, Tokyo 100-0011 (JP)
(74) Representative: Haseltine Lake Kempner LLP
(86) International application number: PCT/JP2024/003357
(87) International publication number: WO 2024/162447

(57) **Abstract**

Provided is a method for producing a grain-oriented electrical steel sheet that enables production of a grain-oriented electrical steel sheet that has uniformly excellent magnetic properties in the rolling direction and the transverse direction, even by an inhibitor-less method. The method includes the steps of: heating a steel slab having a defined chemical composition then hot rolling the steel slab to obtain a hot-rolled sheet; cold rolling the hot-rolled sheet once, or two or more times with intermediate annealing in between, to obtain a cold-rolled sheet; subjecting the cold-rolled sheet to decarburization annealing to obtain a decarburized annealed sheet; applying an annealing separator to the decarburized annealed sheet and then coiling the decarburized annealed sheet to obtain a coil; and subjecting the coil to final annealing. **In** the final annealing, at both a hottest point and a coolest point of the coil, a heating rate H₁ from room temperature to 850 °C is 10.0 °C/h or more and a heating rate H₂ from 850 °C to 950 °C is 15.0°C/h or less.

## Description

### TECHNICAL FIELD

The present disclosure relates to a method for producing a grain-oriented electrical steel sheet.

### BACKGROUND

Grain-oriented electrical steel sheets are soft magnetic material mainly used in the iron cores of transformers and the like, and are required to have excellent magnetic properties, that is, low iron loss and high magnetic flux density. Such grain-oriented electrical steel sheets are produced by using the secondary recrystallization phenomenon to highly accumulate the {110} <001> orientation, known as the Goss orientation.

To achieve a high degree of accumulation of the Goss orientation, conventionally, inhibitor methods have been used. In such methods, a steel slab containing an inhibitor-forming component such as AlN, MnS, or MnSe is heated and then hot rolled to obtain a hot-rolled sheet. The hot-rolled sheet is then subjected to hot-rolled sheet annealing as required, and cold rolling once, or two or more times with intermediate annealing in between, to obtain a cold-rolled sheet. The cold-rolled sheet is then subjected to decarburization annealing to obtain a decarburized annealed sheet. An annealing separator that is mainly MgO is then applied to the decarburized annealed sheet, and the decarburized annealed sheet is then coiled to obtain a coil. The coil is then subjected to final annealing.

In the method using an inhibitor as described above, the steel slab is heated to a high temperature exceeding 1300 °C to cause the inhibitor to become solute, which is then finely dispersed in a subsequent step to suppress primary recrystallized grain growth, thereby allowing secondary recrystallization to develop (for example, see Patent Literature (PTL) 1). That is, the conventional method using an inhibitor requires slab heating at temperatures exceeding 1300 °C, resulting in high production costs and making it impossible to meet the recent need to reduce production costs.

Therefore, in order to solve the above problem caused by the use of an inhibitor, a method that does not use an inhibitor (inhibitor-less method) has been proposed (for example, see PTL 2). In the inhibitor-less method, secondary recrystallization is developed by reducing amounts of inhibitor-forming components and controlling texture. The inhibitor-less method does not require slab heating at high temperatures, and therefore production costs are low and grain-oriented electrical steel sheets may be produced at low cost.

However, the inhibitor-less method has a problem that the resulting magnetic properties are less stable than those of the conventional method using inhibitors, and the magnetic properties vary over the rolling direction or transverse direction of the steel sheet.

In order to solve the above problem, for example, in PTL 3, a method to control the morphology and amount of carbides before cold rolling has been proposed. Further, in PTL 4, a method for controlling a balance between {111} and {411} orientation grains in primary recrystallized grains has been proposed.

### CITATION LIST

### Patent Literature

PTL 1: JP S51-13469 B2
PTL 2: JP 2000-129356 A
PTL 3: JP 2016-156068 A
PTL 4: JP 2019-183271 A

### SUMMARY

### (Technical Problem)

However, even with the technologies described in PTL 3 and PTL 4, although certain effects were recognized, it was still found that the magnetic properties varied over the rolling direction or transverse direction of the steel sheet.

In view of the above circumstances, it would be helpful to provide a method for producing a grain-oriented electrical steel sheet that enables production of a grain-oriented electrical steel sheet that has uniformly excellent magnetic properties in the rolling direction and the transverse direction, even by an inhibitor-less method.

### (Solution to Problem)

The inventors have conducted extensive studies to solve the technical problem described above, and have made the following discoveries. In an inhibitor-less method, magnetic properties are more sensitive to the heating rate in final annealing than in a conventional method using an inhibitor. Therefore, it is important that a heating rate up to a secondary recrystallization temperature range and a heating rate in the secondary recrystallization temperature range are respectively kept within suitable ranges.

Further, during final annealing, the magnetic properties vary within the steel sheet due to variations in heating rate between the hottest point, which is the point of highest temperature in the coil, and the coolest point, which is the point of lowest temperature in the coil. Therefore, variation in the magnetic properties within the steel sheet can be decreased by decreasing such variations in heating rates and by keeping the heating rates in each temperature range within a suitable range at both the hottest point of the coil and the coolest point of the coil.

The present disclosure is made based on these discoveries, and primary features are as described below.
[1] A method for producing a grain-oriented electrical steel sheet, the method comprising the step of:
   heating a steel slab having a chemical composition containing (consisting of), in mass%, C: 0.010 % to 0.100 %, Si: 1.00 % to 5.00 %, Mn: 0.010 % to 0.500 %, N: less than 0.0050 %, Al: less than 0.0100 %, and S: less than 0.0050 %, with the balance being Fe and inevitable impurity, then hot rolling the steel slab to obtain a hot-rolled sheet;
   cold rolling the hot-rolled sheet once, or two or more times with intermediate annealing in between, to obtain a cold-rolled sheet;
   subjecting the cold-rolled sheet to decarburization annealing to obtain a decarburized annealed sheet;
   applying an annealing separator to the decarburized annealed sheet and then coiling the decarburized annealed sheet to obtain a coil; and
   subjecting the coil to final annealing, where,
   in the final annealing, at both a hottest point and a coolest point of the coil, a heating rate H₁ from room temperature to 850 °C is 10.0 °C/h or more and a heating rate H₂ from 850 °C to 950 °C is 15.0°C/h or less.
**[2]** The method for producing a grain-oriented electrical steel sheet according to [1], where, in the final annealing, at both the hottest point and the coolest point of the coil, a heating rate H₃ from 1000 °C to 1100 °C is 5.0 °C/h or more and 30.0 °C/h or less.
[3] The method for producing a grain-oriented electrical steel sheet according to [1] or [2], wherein the chemical composition further contains, in mass%, at least one selected from the group consisting of Se: 0.0001 % to 0.0050 %, B: 0.0001 % to 0.0050 %, P: 0.005 % to 0.100 %, Ti: 0.001 % to 0.010 %, Cr: 0.01 % to 0.50 %, Ni: 0.01 % to 1.50 %, Cu: 0.01 % to 0.50 %, Nb 0.001 % to 0.100 %, Mo: 0.005 % to 0.100 %, Sn: 0.005 % to 0.500 %, Sb: 0.005 % to 0.500 %, and Bi: 0.001 % to 0.050 %.

### (Advantageous Effect)

According to the present disclosure, a grain-oriented electrical steel sheet that has uniformly excellent magnetic properties in the rolling direction and the transverse direction can be produced even by an inhibitor-less method.

### DETAILED DESCRIPTION

The following describes experiments that led to the present disclosure.

Steel slabs each having a chemical composition consisting of, in mass%, C: 0.030 %, Si: 3.20 %, Mn: 0.070 %, N: 0.0040 %, Al: 0.0070 %, and S: 0.0030 %, with the balance being Fe and inevitable impurity, were heated to 1280 °C.

The steel slabs were then subjected to hot rolling to obtain hot-rolled sheets that each had a thickness of 2.0 mm. The hot-rolled sheets were then subjected to cold rolling to obtain cold-rolled sheets that each had a thickness of 0.22 mm. The cold-rolled sheets were then subjected to decarburization annealing under a set of conditions including: a H₂ + N₂ atmosphere, an oxidation ratio (PH₂O/PH₂) of 0.3, an annealing temperature of 840 °C, and a hold time at the annealing temperature of 120 s, to obtain decarburized annealed sheets. Next, an annealing separator with 2.0 mass parts of TiO₂ added to 100 mass parts of MgO was applied to the surfaces of the decarburized annealed sheets, and then the decarburized annealed sheets were coiled to obtain coils that each had a sheet width of 1100 mm and a thickness as listed in Table 1.

The coils were then subjected to final annealing. At the hottest and coolest points of each coil, a heating rate H₁ from room temperature to 850 °C and a heating rate H₂ from 850 °C to 950 °C were the values listed in Table 1. Further, a heating rate H₃ from 1000 °C to 1100 °C was 20.0 °C/h at the hottest point of each coil, and ranged from 12 °C/h to 18 °C/h at the coolest point of each coil. Further heating of each coil was continued, and final annealing was carried out under a set of conditions including that, after the hottest point reached 1200 °C, the coil was held at that temperature for 10 h. The atmosphere in the final annealing was an inert gas atmosphere at 950 °C and below and a H₂ + N₂ mixed atmosphere at 950 °C and above. The positions of the hottest and coolest points of each coil were uniquely determined by heat transfer calculations based on furnace structure, coil shape, and the like. Therefore, at the hottest and coolest points of each coil, the heating rates H₁, H₂, and H₃ were measured by winding a thermocouple into each position.

Test pieces were then taken from the hottest and coolest points of each coil, and magnetic properties (magnetic flux density B₈ and iron loss W_{17/50}) of each test piece were evaluated. The magnetic flux density B₈ and the iron loss W_{17/50} were measured according to JIS C 2550. The measurement results are listed in Table 1.

### [Table 1]

**Table 1**

| No. | Coil thickness (mm) | Hottest point | | Coolest point | | Hottest point | | Coolest point | | Classification |
|---|---|---|---|---|---|---|---|---|---|---|
| | | H₁ (°C/h) | H₂ (°C/h) | H₁ (°C/h) | H₂ (°C/h) | B₈ (T) | W_{17/50} (W/kg) | B₈ (T) | W_{17/50} (W/kg) | |
| 1 | 306 | 5.5 | 5.8 | 4.4 | 4.6 | 1.816 | 1.282 | 1.815 | 1.286 | Comparative Example |
| 2 | 300 | 8.5 | 5.2 | 6.8 | 4.2 | 1.844 | 1.176 | 1.835 | 1.210 | Comparative Example |
| 3 | 304 | 10.5 | 5.0 | 8.4 | 4.0 | 1.902 | 0.956 | 1.847 | 1.165 | Comparative Example |
| 4 | 305 | 15.3 | 5.6 | 12.2 | 4.5 | 1.913 | 0.914 | 1.909 | 0.929 | Example |
| 5 | 294 | 20.9 | 5.7 | 16.7 | 4.6 | 1.926 | 0.865 | 1.916 | 0.903 | Example |
| 6 | 294 | 20.8 | 10.8 | 16.6 | 8.6 | 1.914 | 0.910 | 1.909 | 0.929 | Example |
| 7 | 307 | 20.4 | 14.4 | 16.3 | 11.5 | 1.900 | 0.963 | 1.896 | 0.979 | Example |
| 8 | 302 | 20.8 | 18.8 | 16.6 | 15.0 | 1.812 | 1.298 | 1.890 | 1.001 | Comparative Example |
| 9 | 309 | 20.1 | 20.8 | 16.1 | 16.6 | 1.797 | 1.355 | 1.824 | 1.252 | Comparative Example |
| 10 | 497 | 5.6 | 5.1 | 3.9 | 3.6 | 1.810 | 1.305 | 1.821 | 1.264 | Comparative Example |
| 11 | 498 | 8.3 | 5.3 | 5.8 | 3.7 | 1.840 | 1.191 | 1.838 | 1.199 | Comparative Example |
| 12 | 500 | 10.5 | 5.0 | 7.4 | 3.5 | 1.903 | 0.952 | 1.844 | 1.176 | Comparative Example |
| 13 | 502 | 15.6 | 5.2 | 10.9 | 3.6 | 1.912 | 0.918 | 1.906 | 0.941 | Example |
| 14 | 500 | 20.8 | 5.7 | 14.6 | 4.0 | 1.926 | 0.865 | 1.917 | 0.899 | Example |
| 15 | 493 | 20.3 | 10.6 | 14.2 | 7.4 | 1.910 | 0.925 | 1.909 | 0.929 | Example |
| 16 | 507 | 20.7 | 15.0 | 14.5 | 10.5 | 1.903 | 0.952 | 1.896 | 0.979 | Example |
| 17 | 498 | 20.2 | 18.0 | 14.1 | 12.6 | 1.811 | 1.301 | 1.894 | 0.986 | Comparative Example |
| 18 | 505 | 20.3 | 20.2 | 14.2 | 14.1 | 1.794 | 1.366 | 1.886 | 1.017 | Comparative Example |
| 19 | 703 | 5.6 | 5.7 | 3.4 | 3.4 | 1.816 | 1.282 | 1.800 | 1.343 | Comparative Example |
| 20 | 692 | 8.6 | 5.2 | 5.2 | 3.1 | 1.842 | 1.184 | 1.816 | 1.282 | Comparative Example |
| 21 | 709 | 10.3 | 5.1 | 6.2 | 3.1 | 1.901 | 0.960 | 1.837 | 1.203 | Comparative Example |
| 22 | 706 | 15.2 | 5.9 | 9.1 | 3.5 | 1.913 | 0.914 | 1.848 | 1.161 | Comparative Example |
| 23 | 694 | 20.0 | 5.8 | 12.0 | 3.5 | 1.926 | 0.865 | 1.910 | 0.925 | Example |
| 24 | 701 | 20.9 | 10.5 | 12.5 | 6.3 | 1.910 | 0.925 | 1.902 | 0.956 | Example |
| 25 | 702 | 20.0 | 14.5 | 12.0 | 8.7 | 1.902 | 0.956 | 1.898 | 0.971 | Example |
| 26 | 692 | 20.7 | 18.0 | 12.4 | 10.8 | 1.816 | 1.282 | 1.894 | 0.986 | Comparative Example |
| 27 | 701 | 20.0 | 20.4 | 12.0 | 12.2 | 1.790 | 1.381 | 1.885 | 1.020 | Comparative Example |

As is apparent from Table 1, the slower the heating rate H₁ and the faster the heating rate H₂, the more the magnetic properties degraded. In addition, the thicker the coil, the more the heating rate variation increases between the hottest point of the coil and the coolest point of the coil, especially at the coolest point of the coil, where the heating rate H₁ tends to be slower and the magnetic properties are easily degraded.

Although the details of the causes for these results are not clear, the inventors think the following may be reasons. In an inhibitor-less method, primary recrystallized grains tend to coarsen due to weak growth inhibition of primary recrystallized grains. Therefore, when the heating rate H₁ is too slow, the temperature reaches the secondary recrystallization temperature range around 850 °C too late, the primary recrystallized grains coarsen before secondary recrystallization, and the driving force for secondary recrystallization is decreased. This is thought to have degraded the magnetic properties.

When the heating rate H₂ is too fast, residence time in the secondary recrystallization temperature range decreases and the high temperature range is reached faster. As a result, the driving force for secondary recrystallization becomes excessive, and secondary recrystallization is more likely to occur even in orientations deviating from the Goss orientation, and eventually secondary recrystallization will not occur. This is thought to have degraded the magnetic properties.

Thus, in an inhibitor-less method, the magnetic properties are more sensitive to the heating rate in final annealing than in a conventional method using an inhibitor. Therefore, it is important to keep the heating rate up to the secondary recrystallization temperature range and the heating rate in the secondary recrystallization temperature range within suitable ranges, respectively.

Further, variations in heating rates between the hottest point and the coolest point of a coil can lead to variations in the magnetic properties within a steel sheet. Thus, for example, by reducing coil thickness and reducing this heating rate variation, it is possible to decrease variation of the magnetic properties within the steel sheet when the heating rates in the above two temperature ranges are each within a suitable range at both the hottest point and the coolest point of the coil.

A method for producing a grain-oriented electrical steel sheet according to an embodiment of the present disclosure is described below. First, chemical composition of a steel slab is described. Hereinafter, "%" of each component means "mass%" unless otherwise specified.

C is an effective component for improving the primary recrystallized texture. From the viewpoint of obtaining this effect, C content is 0.010 % or more. The C content is preferably 0.020 % or more. On the other hand, when the C content is excessive, decarburization becomes difficult and the magnetic properties degrade. The C content is therefore 0.100 % or less. The C content is preferably 0.080 % or less.

Si is an effective component for increasing specific resistance and improving the magnetic properties. From the viewpoint of obtaining these effects, Si content is 1.00 % or more. The Si content is preferably 2.00 % or more. On the other hand, when the Si content is excessive, cold ductility degrades significantly. The Si content is therefore 5.00 % or less. The Si content is preferably 4.00 % or less.

Mn, like Si, is an effective component for increasing specific resistance and improving the magnetic properties, and also for improving thermal ductility. From the viewpoint of obtaining these effects, Mn content is 0.010 % or more. The Mn content is preferably 0.020 % or more. On the other hand, when the Mn content is excessive, the magnetic properties degrade. The Mn content is therefore 0.500 % or less. The Mn content is preferably 0.200 % or less.

The present disclosure relates to an inhibitor-less method, and therefore inhibitor-forming components, N, Al, and S, need to be kept to a minimum. Specifically, N content needs to be less than 0.0050 %, Al content needs to be less than 0.0100 %, and S content needs to be less than 0.0050 %. The N content is preferably less than 0.0045 %. The Al content is preferably less than 0.0080 %. The S content is preferably less than 0.0040 %. A lower limit of content of these three elements is not particularly limited, and the content of these three elements may be 0.0000 % each. However, appropriate content of N, Al, and S within a range that satisfies the upper limit of the content range described above has an effect of stabilizing secondary recrystallization and improving the magnetic properties. The N content is therefore preferably 0.0010 % or more. The Al content is preferably 0.0010 % or more. The S content is preferably 0.0010 % or more.

The balance, other than the components described above, consists of Fe and inevitable impurity, but may optionally contain the following elements. That is, to further improve magnetic properties, the chemical composition may further contain at least one selected from the group consisting of Se: 0.0001 % to 0.0050 %, B: 0.0001 % to 0.0050 %, P: 0.005 % to 0.100 %, Ti: 0.001 % to 0.010 %, Cr: 0.01 % to 0.50 %, Ni: 0.01 % to 1.50 %, Cu: 0.01 % to 0.50 %, Nb: 0.001 % to 0.100 %, Mo: 0.005 % to 0.100 %, Sn: 0.005 % to 0.500 %, Sb: 0.005 % to 0.500 %, and Bi: 0.001 % to 0.050 %.

Next, the following describes each step in the method for producing a grain-oriented electrical steel sheet according to an embodiment of the present disclosure. First, a steel slab having the chemical composition described above is heated. Here, the slab heating temperature is preferably in a range from 1000 °C to 1300 °C. When the slab heating temperature is less than 1000 °C, hot ductility degrades. Further, without inhibitors, a slab heating temperature above 1300 °C is no longer effective, and increases production costs and degrades the magnetic properties due to coarsening of crystal grains.

The steel slab is then hot rolled to obtain a hot-rolled sheet. The hot-rolled sheet is then optionally subjected to hot-rolled sheet annealing. The hot-rolled sheet is then subjected to cold rolling once, or two or more times with intermediate annealing in between, to obtain a cold-rolled sheet.

The cold-rolled sheet is then subjected to decarburization annealing to obtain a decarburized annealed sheet. Here, the annealing temperature during the decarburization annealing is preferably 750 °C or more. The annealing temperature is preferably 950 °C or less. The hold time at the annealing temperature is preferably 80 s or longer. The hold time is preferably 200 s or shorter. When the annealing temperature is 750 °C or more and the hold time is 80 s or longer, decarburization progresses sufficiently. When the annealing temperature is 950 °C or less and the hold time is 200 s or shorter, the primary recrystallized grains do not coarsen, and therefore secondary recrystallization is not suppressed and the magnetic properties are not degraded.

The atmosphere during the decarburization annealing is preferably a H₂ + N₂ atmosphere. The oxidation ratio (PH₂O/PH₂) during the decarburization annealing is preferably 0.1 or more. PH₂O/PH₂ is preferably 0.6 or less. When PH₂O/PH₂ is 0.1 or more, decarburization progresses sufficiently. When PH₂O/PH₂ is 0.6 or less, FeO is not formed and coating properties are not degraded.

An annealing separator is then applied to the decarburized annealed sheet. As an annealing separator, a known or any annealing separator that is mainly MgO may be used. In order to improve coating properties and the magnetic properties, the annealing separator may contain additives consisting of one or more of oxides, hydroxides, borates, carbonates, nitrates, phosphates, sulfates, and halides of Li, Na, Mg, Al, Si, K, Ca, Ti, V, Fe, Co, Ni, Cu, Sr, Ba, and lanthanides. In such cases, relative to 100 mass parts of MgO, the amount of additive is preferably 0.01 mass parts or more. The amount of additive is preferably 15 mass parts or less. When the amount of additive is 0.01 mass parts or more, sufficient addition effect is obtainable. When the amount of additive is 15 mass parts or less, the magnetic properties are not degraded.

The decarburized annealed sheet is then coiled to obtain a coil, and final annealing is subjected to the coil. The final annealing consists of secondary recrystallization annealing from room temperature to 950 °C, followed by purification annealing at 1100 °C to 1300 °C, held for 5 h to 50 h. The secondary recrystallization annealing is annealing to promote secondary recrystallization, and the purification annealing is annealing to purify impurities.

According to the present embodiment, it is important that in the final annealing, at both the hottest point and the coolest point of the coil, the heating rate H₁ from room temperature to 850 °C is 10.0 °C/h or more and the heating rate H₂ from 850 °C to 950 °C is 15.0 °C/h or less. The coil temperature at the start of the final annealing is room temperature, and therefore the heating rate H₁ means the heating rate from the temperature at the time of the final annealing to 850 °C. The room temperature is not particularly limited, and may range from -10 °C to 50 °C, for example.

When the heating rate H₁ is less than 10.0 °C/h, the driving force of secondary recrystallization decreases and the magnetic properties degrade. The heating rate H₁ is therefore 10.0 °C/h or more. An upper limit of the heating rate H₁ is not particularly limited. Industrially, the heating rate H₁ may be 30.0 °C/h or less.

When the heating rate H₂ exceeds 15.0 °C/h, the driving force for secondary recrystallization becomes excessive and the magnetic properties degrade. The heating rate H₂ is therefore 15.0 °C/h or less. A lower limit of the heating rate H₂ is not particularly limited. From the viewpoint of productivity, the heating rate H₂ is preferably 2.0 °C/h or more.

The annealing atmosphere from room temperature to 950 °C during the final annealing is preferably an inert atmosphere of N₂ or Ar.

According to the present embodiment, in the final annealing, at both the hottest point and the coolest point of the coil, the heating rate H₃ from 1000 °C to 1100 °C is preferably 5.0 °C/h or more. The heating rate H₃ is preferably 30.0 °C/h or less. When the heating rate H₃ is 5.0 °C/h or more, coating formation progresses appropriately and excellent coating properties are obtainable. Further, when the heating rate H₃ is 30.0 °C/h or less, coating formation does not become excessive and the heating rate does not lead to degradation of coating properties such as point-like defects.

The annealing atmosphere at 950 °C or more during the final annealing is preferably a H₂ + N₂ atmosphere.

The positions of the hottest point and the coolest point of the coil are uniquely determined by heat transfer calculations based on furnace structure, coil shape, and the like. Any method of determining the heating rate may be appropriately used as long as it is a conventional method, and the method is not particularly limited. For example, a thermocouple may be coiled around the positions of the hottest point and the coolest point of the coil for actual measurement, or a prediction model may be created based on past final annealing results and the heating rate may be calculated from final annealing conditions such as annealing temperature and time.

Further, the method of decreasing variation in the heating rate between the hottest point and the coolest point of the coil is not particularly limited. As examples, coil thickness may be decreased, soaking treatment may be applied before reaching the secondary recrystallization temperature range, or heating may be applied from a furnace hearth near the coolest point of the coil using a furnace hearth heater. The method of decreasing coil thickness may be simply by decreasing the mass of the coil or by enlarging the coil outer and inner diameters without decreasing the mass of the coil.

The annealing temperature in the purification annealing is preferably 1100 °C or more at the hottest point of the coil. The annealing temperature is preferably 1300 °C or less. The hold time at the annealing temperature is preferably 5 h or longer. The hold time is preferably 50 h or shorter. When the annealing temperature at the hottest point is 1100 °C or more and the hold time is 5 h or longer, purification progresses sufficiently, and therefore the magnetic properties are improved. Further, when the annealing temperature at the hottest point is 1300 °C or less and the hold time is 50 h or less, the coil does not buckle and shape does not degrade.

Subsequently, as required, insulating coating, flattening annealing, and magnetic domain refining treatment are applied to the grain-oriented electrical steel sheet.

In the method for producing a grain-oriented electrical steel sheet according to the present disclosure, anything not described herein may follow a conventional method.

### EXAMPLES

### [Example Group 1]

Steel slabs having the chemical composition listed in Table 2 were heated to 1280 °C. The steel slabs were then subjected to hot rolling to obtain hot-rolled sheets that each had a thickness of 2.4 mm. The hot-rolled sheets were then subjected to cold rolling to obtain cold-rolled sheets that each had a thickness of 0.23 mm. The cold-rolled sheets were then subjected to decarburization annealing under a set of conditions including: a H₂ + N₂ atmosphere, an oxidation ratio (PH₂O/PH₂) of 0.3, an annealing temperature of 840 °C, and a hold time at the annealing temperature of 120 s, to obtain decarburized annealed sheets. Next, an annealing separator with 5.0 mass parts of TiO₂ added to 100 mass parts of MgO was applied to the surfaces of the decarburized annealed sheets, and then the decarburized annealed sheets were coiled to obtain coils that each had a sheet width of 1200 mm and a thickness of 500 mm.

The coils were then subjected to final annealing. While heating was applied from a furnace hearth using a furnace hearth heater, at the hottest and coolest points of each coil, the heating rate H₁ from room temperature to 850 °C and the heating rate H₂ from 850 °C to 950 °C were the values listed in Table 2. Further, a heating rate H₃ from 1000 °C to 1100 °C was 20.0 °C/h at the hottest point of each coil, and ranged from 12 °C/h to 18 °C/h at the coolest point of each coil. Further heating of each coil was continued, and final annealing was carried out under a set of conditions including that, after the hottest point reached 1200 °C, the coil was held at that temperature for 10 h. The atmosphere in the final annealing was an inert gas atmosphere at 950 °C and below and a H₂ + N₂ mixed atmosphere at 950 °C and above. The positions of the hottest and coolest points of each coil were uniquely determined by heat transfer calculations based on furnace structure, coil shape, and the like. Therefore, at the hottest and coolest points of each coil, the heating rates H₁, H₂, and H₃ were measured by winding a thermocouple into each position.

Test pieces were then taken from the hottest and coolest points of each coil, and magnetic properties (magnetic flux density B₈ and iron loss W_{17/50}) of each test piece were evaluated. The magnetic flux density B₈ and the iron loss W_{17/50} were measured according to JIS C 2550. The measurement results are listed in Table 2.

### [Table 2]

**Table 2**

| No. | Chemical composition | | | | | | | | Hottest point | | Coolest point | | Hottest point | | Coolest point | | Classification |
|---|---|---|---|---|---|---|---|---|---|---|---|---|---|---|---|---|---|
| | C (mass%) | Si (mass%) | Mn (mass%) | N (mass%) | Al (mass%) | S (mass%) | Se (mass%) | Other (mass%) | H₁ (°C/h) | H₂ (°C/h) | H₁ (°C/h) | H₂ (°C/h) | B₈ (T) | W_{17/50} (W/kg) | B₈ (T) | W_{17/50} (W/kg) | |
| 1 | 0.055 | 2.13 | 0.184 | 0.0024 | 0.0053 | 0.0024 | 0.0011 | Ni:0.03, Bi:0.001 | 5.4 | 57 | 4.3 | 4.6 | 1.816 | 1.282 | 1.817 | 1.279 | Comparative Example |
| 2 | 0.031 | 2.24 | 0.136 | 0.0029 | 0.0065 | 0.0029 | 0.0012 | Sb:0.060 | 8.2 | 57 | 6.6 | 4.6 | 1.844 | 1.176 | 1.831 | 1.226 | Comparative Example |
| 3 | 0.070 | 3.38 | 0.119 | 0.0023 | 0.0051 | 0.0019 | 0.0030 | B:0.0003, Ti:0.002, Mo:0.040 | 10.6 | 5.2 | 8.5 | 4.2 | 1.904 | 0.948 | 1.845 | 1.172 | Comparative Example |
| 4 | 0.063 | 2.55 | 0.123 | 0.0031 | 0.0057 | 0.0019 | 0.0024 | P:0.040, Ti:0.004 | 15.4 | 57 | 12.3 | 4.6 | 1.912 | 0.918 | 1.905 | 0.944 | Example |
| 5 | 0.073 | 3.02 | 0.156 | 0.0031 | 0.0054 | 0.0010 | 0.0022 | Cu:0.02, Mo:0.060 | 20.8 | 5.5 | 16.6 | 4.4 | 1.929 | 0.853 | 1.916 | 0.903 | Example |
| 6 | 0.079 | 3.96 | 0.153 | 0.0020 | 0.0062 | 0.0023 | 0.0022 | Ti:0.003, Cr:0.04 | 20.9 | 10.5 | 16.7 | 8.4 | 1.913 | 0.914 | 1.908 | 0.933 | Example |
| 7 | 0.059 | 2.28 | 0.046 | 0.0025 | 0.0067 | 0.0014 | 0.0028 | P:0.070, Nb:0.030 | 20.5 | 14.3 | 16.4 | 11.4 | 1.902 | 0.956 | 1.897 | 0.975 | Example |
| 8 | 0.021 | 3.23 | 0.111 | 0.0038 | 0.0072 | 0.0026 | 0.0024 | Mo:0.050 | 20.3 | 18.3 | 16.2 | 14.6 | 1.818 | 1.275 | 1.892 | 0.994 | Comparative Example |
| 9 | 0.053 | 3.67 | 0.169 | 0.0037 | 0.0050 | 0.0021 | 0.0016 | Sn:0.100 | 20.1 | 20.3 | 16.1 | 16.2 | 1.792 | 1.374 | 1.827 | 1.241 | Comparative Example |
| 10 | 0.008 | 3.52 | 0.093 | 0.0023 | 0.0058 | 0.0021 | 0.0020 | Ti:0.001, Ni:1.20, Nb:0.006 | 20.7 | 5.0 | 16.6 | 4.0 | 1.839 | 1.195 | 1.816 | 1.282 | Comparative Example |
| 11 | 0.123 | 2.71 | 0.102 | 0.0026 | 0.0072 | 0.0025 | 0.0029 | Cr:0.30 | 20.1 | 5.2 | 16.1 | 4.2 | 1.799 | 1.347 | 1.836 | 1.207 | Comparative Example |
| 12 | 0.065 | 5.54 | 0.089 | 0.0031 | 0.0054 | 0.0013 | 0.0022 | B:0.0020 | 20.7 | 5.1 | 16.6 | 4.1 | 1.799 | 1.347 | 1.796 | 1.358 | Comparative Example |
| 13 | 0.039 | 0.92 | 0.097 | 0.0024 | 0.0057 | 0.0013 | 0.0014 | B:0.0001, P:0.005 | 20.8 | 5.2 | 16.6 | 4.2 | 1.849 | 1.157 | 1.796 | 1.358 | Comparative Example |
| 14 | 0.020 | 3.12 | 0.009 | 0.0029 | 0.0069 | 0.0015 | 0.0012 | P:0.030, Ni:0.80 | 20.5 | 57 | 16.4 | 4.6 | 1.799 | 1.347 | 1.836 | 1.207 | Comparative Example |
| 15 | 0.040 | 3.35 | 0.522 | 0.0034 | 0.0068 | 0.0012 | 0.0013 | Mo:0.008 | 20.7 | 5.1 | 16.6 | 4.1 | 1.819 | 1.271 | 1.806 | 1.320 | Comparative Example |
| 16 | 0.052 | 3.21 | 0.060 | 0.0025 | 0.0031 | 0.0024 | - | - | 20.3 | 4.7 | 15.7 | 4.2 | 1.919 | 0.880 | 1.911 | 0.917 | Example |
| 17 | 0.058 | 3.00 | 0.104 | 0.0011 | 0.0027 | 0.0024 | - | - | 20.0 | 5.0 | 15.9 | 4.3 | 1.918 | 0.880 | 1.917 | 0.879 | Example |
| 18 | 0.028 | 2.97 | 0.146 | 0.0040 | 0.0065 | 0.0023 | - | - | 19.9 | 5.2 | 16.3 | 4.9 | 1.918 | 0.911 | 1.926 | 0.874 | Example |
| 19 | 0.070 | 3.18 | 0.021 | 0.0027 | 0.0060 | 0.0015 | - | - | 20.3 | 4.5 | 15.3 | 4.0 | 1.907 | 0.949 | 1.916 | 0.924 | Example |
| 20 | 0.007 | 3.24 | 0.067 | 0.0024 | 0.0033 | 0.0022 | - | - | 21.0 | 4.6 | 15.9 | 4.3 | 1.827 | 1.257 | 1.816 | 1.302 | Comparative Example |
| 21 | 0.013 | 3.26 | 0.069 | 0.0025 | 0.0033 | 0.0022 | - | - | 19.6 | 4.8 | 15.2 | 4.3 | 1.883 | 1.031 | 1.888 | 1.030 | Example |
| 22 | 0.085 | 3.21 | 0.051 | 0.0027 | 0.0030 | 0.0023 | - | - | 19.6 | 4.6 | 15.0 | 4.2 | 1.893 | 0.989 | 1.888 | 0.986 | Example |
| 23 | 0.134 | 3.26 | 0.061 | 0.0027 | 0.0029 | 0.0025 | - | - | 21.4 | 4.5 | 16.1 | 4.1 | 1.829 | 1.235 | 1.832 | 1.224 | Comparative Example |
| 24 | 0.054 | 0.82 | 0.054 | 0.0025 | 0.0030 | 0.0026 | - | - | 19.8 | 4.7 | 15.3 | 4.2 | 1.813 | 1.316 | 1.821 | 1.250 | Comparative Example |
| 25 | 0.054 | 1.82 | 0.054 | 0.0027 | 0.0031 | 0.0026 | - | - | 20.9 | 5.0 | 16.7 | 4.7 | 1.895 | 1.002 | 1.896 | 0.963 | Example |
| 26 | 0.052 | 4.13 | 0.062 | 0.0027 | 0.0032 | 0.0024 | - | - | 21.2 | 4.5 | 16.0 | 3.8 | 1.912 | 0.915 | 1.933 | 0.845 | Example |
| 27 | 0.052 | 6.21 | 0.054 | 0.0023 | 0.0030 | 0.0024 | - | - | Couldn't be evaluated due to cold-rolling fracture | | | | | | | | Comparative Example |
| 28 | 0.050 | 3.29 | 0.007 | 0.0025 | 0.0032 | 0.0023 | - | - | 21.3 | 4.8 | 16.6 | 4.2 | 1.836 | 1.185 | 1.816 | 1.304 | Comparative Example |
| 29 | 0.050 | 3.27 | 0.014 | 0.0024 | 0.0030 | 0.0026 | - | - | 21.4 | 4.6 | 16.3 | 4.0 | 1.933 | 0.819 | 1.916 | 0.883 | Example |
| 30 | 0.052 | 3.22 | 0.322 | 0.0024 | 0.0030 | 0.0024 | - | - | 19.0 | 4.8 | 14.8 | 4.5 | 1.898 | 0.972 | 1.888 | 0.999 | Example |
| 31 | 0.053 | 3.18 | 0.516 | 0.0026 | 0.0032 | 0.0024 | - | - | 19.5 | 4.9 | 15.3 | 4.4 | 1.813 | 1.300 | 1.827 | 1.251 | Comparative Example |
| 32 | 0.058 | 3.04 | 0.098 | 0.0003 | 0.0005 | 0.0003 | - | - | 209 | 5.1 | 16.9 | 4.8 | 1.887 | 1.014 | 1.893 | 0.972 | Example |
| 33 | 0.028 | 2.97 | 0.142 | 0.0039 | 0.0064 | 0.0025 | 0.0001 | - | 18.6 | 4.8 | 14.5 | 4.4 | 1.940 | 0.807 | 1.930 | 0.839 | Example |
| 34 | 0.027 | 2.98 | 0.149 | 0.0040 | 0.0067 | 0.0021 | 0.0018 | - | 19.6 | 5.1 | 15.9 | 4.4 | 1.943 | 0.793 | 1.940 | 0.817 | Example |
| 35 | 0.028 | 2.95 | 0.146 | 0.0039 | 0.0064 | 0.0024 | 0.0048 | - | 19.2 | 5.3 | 16.1 | 49 | 1.936 | 0.827 | 1.934 | 0.833 | Example |

As is apparent from Table 2, the Examples according to the present disclosure produced grain-oriented electrical steel sheets that had uniformly excellent magnetic properties in the rolling direction and the transverse direction. In contrast, the Comparative Examples that deviated from the present disclosure did not produce grain-oriented electrical steel sheets that had uniformly excellent magnetic properties in the rolling direction and the transverse direction.

### [Example Group 2]

Steel slabs each having a chemical composition consisting of, in mass%, C: 0.040 %, Si: 3.20 %, Mn: 0.070 %, N: 0.0030 %, Al: 0.0060 %, and S: 0.0030 %, with the balance being Fe and inevitable impurity, were heated to 1280 °C.

The steel slabs were then subjected to hot rolling to obtain hot-rolled sheets that each had a thickness of 2.6 mm. The hot-rolled sheets were then subjected to cold rolling to obtain cold-rolled sheets that each had a thickness of 0.27 mm. The cold-rolled sheets were then subjected to decarburization annealing under a set of conditions including: a H₂ + N₂ atmosphere, an oxidation ratio (PH₂O/PH₂) of 0.32, an annealing temperature of 840 °C, and a hold time at the annealing temperature of 120 s, to obtain decarburized annealed sheets. Next, an annealing separator with 2.5 mass parts of TiO₂ added to 100 mass parts of MgO was applied to the surfaces of the decarburized annealed sheets, and then the decarburized annealed sheets were coiled to obtain coils that each had a sheet width of 1150 mm and a thickness as listed in Table 3.

The coils were then subjected to final annealing. At this time, the heating rate H₁ from room temperature to 850 °C was 20.0 °C/h at the hottest point of each coil, and ranged from 12 °C/h to 18 °C/h at the coolest point of each coil. The heating rate H₂ from 850 °C to 950 °C was 5.0 °C/h at the hottest point of each coil, and ranged from 4 °C/h to 13 °C/h at the coolest point of each coil. At the hottest point and the coolest point of each coil, the heating rate H₃ from 1000 °C to 1100 °C was the values listed in Table 3. Further heating of each coil was continued, and final annealing was carried out under a set of conditions including that, after the hottest point reached 1200 °C, the coil was held at that temperature for 10 h. The atmosphere in the final annealing was an inert gas atmosphere at 950 °C and below and a H₂ + N₂ mixed atmosphere at 950 °C and above. The positions of the hottest and coolest points of each coil were uniquely determined by heat transfer calculations based on furnace structure, coil shape, and the like. Therefore, at the hottest and coolest points of each coil, the heating rates H₁, H₂, and H₃ were calculated using a prediction model created in advance.

Test pieces were then taken from the hottest and coolest points of each coil, and coating properties (uniformity and adhesion) of each test piece were evaluated. Uniformity was evaluated by visual observation of the coating appearance, and evaluated as "Excellent" for uniformity, "Acceptable" for slight non-uniformity, and "Poor" for non-uniformity. Adhesion was evaluated by wrapping the test pieces around round bars of various diameters and evaluated as the smallest diameter at which the coating did not separate (bending separation diameter). The evaluation results are listed in Table 3.

The magnetic properties (magnetic flux density B₈ and iron loss W_{17/50}) of test pieces taken from the hottest and coolest points of each coil were measured as in Example Group 1. Example Group 2 are all Examples for which the heating rate H₁ and the heating rate H₂ satisfied the ranges specified in the present disclosure, and therefore the magnetic flux density B₈ at the hottest point ranged from 1.88 T to 1.95 T and the iron loss W_{17/50} ranged from 0.79 W/kg to 1.05 W/kg, which are all good values. Further, the magnetic flux density B₈ at the coolest point ranged from 1.88 T to 1.94 T, and the iron loss W_{17/50} ranged from 0.81 W/kg to 1.03 W/kg, which are all good values.

### [Table 3]

**Table 3**

| No. | Coil thickness (mm) | Hottest point | Coolest point | Hottest point | | Coolest point | | Classification |
|---|---|---|---|---|---|---|---|---|
| | | H₃ (°C/h) | H₃ (°C/h) | Coating appearance | Bending separation diameter (mm) | Coating appearance | Bending separation diameter (mm) | |
| 1 | 303 | 2.5 | 2.0 | Poor | 40 | Poor | 40 | Example |
| 2 | 299 | 3.9 | 3.1 | Acceptable | 30 | Poor | 40 | Example |
| 3 | 292 | 5.6 | 4.5 | Excellent | 20 | Acceptable | 30 | Example |
| 4 | 307 | 10.3 | 8.2 | Excellent | 20 | Excellent | 20 | Example |
| 5 | 296 | 15.1 | 12.1 | Excellent | 20 | Excellent | 20 | Example |
| 6 | 308 | 20.8 | 16.6 | Excellent | 20 | Excellent | 20 | Example |
| 7 | 308 | 29.9 | 23.9 | Excellent | 20 | Excellent | 20 | Example |
| 8 | 298 | 35.3 | 28.2 | Acceptable | 30 | Excellent | 20 | Example |
| 9 | 297 | 40.2 | 32.2 | Poor | 40 | Acceptable | 30 | Example |
| 10 | 495 | 2.5 | 1.8 | Poor | 40 | Poor | 40 | Example |
| 11 | 509 | 3.1 | 2.2 | Acceptable | 30 | Poor | 40 | Example |
| 12 | 501 | 5.2 | 3.6 | Excellent | 20 | Acceptable | 30 | Example |
| 13 | 507 | 10.9 | 7.6 | Excellent | 20 | Excellent | 20 | Example |
| 14 | 502 | 15.9 | 11.1 | Excellent | 20 | Excellent | 20 | Example |
| 15 | 504 | 20.9 | 14.6 | Excellent | 20 | Excellent | 20 | Example |
| 16 | 507 | 29.8 | 20.9 | Excellent | 20 | Excellent | 20 | Example |
| 17 | 505 | 35.6 | 24.9 | Acceptable | 30 | Excellent | 20 | Example |
| 18 | 491 | 40.2 | 28.1 | Poor | 40 | Excellent | 20 | Example |
| 19 | 699 | 2.1 | 1.3 | Poor | 40 | Poor | 40 | Example |
| 20 | 699 | 3.2 | 1.9 | Acceptable | 30 | Poor | 40 | Example |
| 21 | 692 | 5.2 | 3.1 | Excellent | 20 | Acceptable | 30 | Example |
| 22 | 707 | 10.6 | 6.4 | Excellent | 20 | Excellent | 20 | Example |
| 23 | 700 | 15.9 | 9.5 | Excellent | 20 | Excellent | 20 | Example |
| 24 | 691 | 20.9 | 12.5 | Excellent | 20 | Excellent | 20 | Example |
| 25 | 702 | 29.3 | 17.6 | Excellent | 20 | Excellent | 20 | Example |
| 26 | 696 | 35.9 | 21.5 | Acceptable | 30 | Excellent | 20 | Example |
| 27 | 692 | 40.6 | 24.4 | Poor | 40 | Excellent | 20 | Example |

As is apparent from Table 3, in the Examples where the heating rate H₃ satisfied the range specified in the present disclosure, it was possible to produce a grain-oriented electrical steel sheet that had uniformly excellent magnetic properties in the rolling direction and the transverse direction as well as uniformly excellent coating properties in the rolling direction and the transverse direction. In contrast, in the Examples where the heating rate H₃ was outside the range specified in the present disclosure, it was possible to produce a grain-oriented electrical steel sheet that had uniformly excellent magnetic properties in the rolling direction and the transverse direction, but it was not possible to produce a grain-oriented electrical steel sheet that had uniformly excellent coating properties in the rolling direction and the transverse direction.

### INDUSTRIAL APPLICABILITY

According to the present disclosure, a grain-oriented electrical steel sheet that has uniformly excellent magnetic properties in the rolling direction and the transverse direction can be produced even by an inhibitor-less method.

## Claims

1. A method for producing a grain-oriented electrical steel sheet, the method comprising the steps of:
heating a steel slab having a chemical composition containing, in mass%, C: 0.010 % to 0.100 %, Si: 1.00 % to 5.00 %, Mn: 0.010 % to 0.500 %, N: less than 0.0050 %, Al: less than 0.0100 %, and S: less than 0.0050 %, with the balance being Fe and inevitable impurity, then hot rolling the steel slab to obtain a hot-rolled sheet;
cold rolling the hot-rolled sheet once, or two or more times with intermediate annealing in between, to obtain a cold-rolled sheet;
subjecting the cold-rolled sheet to decarburization annealing to obtain a decarburized annealed sheet;
applying an annealing separator to the decarburized annealed sheet and then coiling the decarburized annealed sheet to obtain a coil; and
subjecting the coil to final annealing, where,
in the final annealing, at both a hottest point and a coolest point of the coil, a heating rate H₁ from room temperature to 850 °C is 10.0 °C/h or more and a heating rate H₂ from 850 °C to 950 °C is 15.0°C/h or less.

2. The method for producing a grain-oriented electrical steel sheet according to claim 1, where, in the final annealing, at both the hottest point and the coolest point of the coil, a heating rate H₃ from 1000 °C to 1100 °C is 5.0 °C/h or more and 30.0 °C/h or less.

3. The method for producing a grain-oriented electrical steel sheet according to claim 1 or 2, wherein the chemical composition further contains, in mass%, at least one selected from the group consisting of Se: 0.0001 % to 0.0050 %, B: 0.0001 % to 0.0050 %, P: 0.005 % to 0.100 %, Ti: 0.001 % to 0.010 %, Cr: 0.01 % to 0.50 %, Ni: 0.01 % to 1.50 %, Cu: 0.01 % to 0.50 %, Nb 0.001 % to 0.100 %, Mo: 0.005 % to 0.100 %, Sn: 0.005 % to 0.500 %, Sb: 0.005 % to 0.500 %, and Bi: 0.001 % to 0.050 %.
